# EUROPÄISCHE PATENTSCHRIFT

(11) **EP 4 237 788 B1**
(45) Veröffentlichungstag und Bekanntmachung des Hinweises auf die Patenterteilung: **09.10.2024**
(21) Anmeldenummer: 20833767.5
(22) Anmeldetag: 15.12.2020
(51) Int. Cl.: G01B 5/06

(54) **VERFAHREN ZUM ERMITTELN DER DICKE EINES MATERIALBANDES BEIM ZUFÜHREN DES MATERIALBANDES ZUR BEARBEITUNGSZONE EINER WERKZEUGMASCHINE**
METHOD FOR DETERMINING THE THICKNESS OF A MATERIAL STRIP DURING THE FEED OF THE MATERIAL STRIP TO THE MACHINING ZONE OF A MACHINE TOOL
PROCÉDÉ DE DÉTERMINATION DE L'ÉPAISSEUR D'UNE BANDE DE MATÉRIAU LORS DE L'ALIMENTATION DE LA BANDE DE MATÉRIAU DANS LA ZONE D'USINAGE D'UNE MACHINE-OUTIL

(43) Veröffentlichungstag der Anmeldung: 06.09.2023
(73) Patentinhaber: Bruderer AG, 9320 Frasnacht (CH)
(72) Erfinder: DE SANTIS, Ugo, 9325 Roggwil (CH); HÖGGER, Herbert, 6840 Götzis (AT)
(74) Vertreter: E. Blum & Co. AG
(86) Internationale Anmeldenummer: PCT/EP2020/086188
(87) Internationale Veröffentlichungsnummer: WO 2022/128073

(56) Entgegenhaltungen:
- EP-A2- 2 211 138
- DE-B- 1 126 830
- DE-T2- 69 418 136
- JP-A- 2012 030 937
- US-A- 3 540 247

## Beschreibung

### TECHNISCHES GEBIET

Die vorliegende Erfindung betrifft ein Verfahren zum Ermitteln der Dicke eines Materialbandes beim Zuführen des Materialbandes zur Bearbeitungszone einer Werkzeugmaschine, eine Walzenanordnung zur Verwendung bei der Durchführung des Verfahrens, einen Vorschubapparat mit der Walzenanordnung sowie eine Werkzeugmaschine zur Durchführung des Verfahrens mit einer solchen Walzenanordnung oder einem solchen Vorschubapparat gemäss den Oberbegriffen der unabhängigen Patentansprüche.

### STAND DER TECHNIK

Beim industriellen Ausstanzen von Produkten aus Materialbändern gibt es immer wieder Anwendungen, bei denen die genaue Banddicke von Bedeutung ist.

So wird beispielsweise beim Münzstanzen über die Banddicke auf das Gewicht der Münze geschlossen. Stimmt die Dicke nicht, wird die Münze ausgeschossen.

Beim Elektroblechstanzen werden die Bleche zu einem Paket zusammengesetzt. Ein kleiner Fehler in der Banddicke führt zu grossen Variationen der Pakethöhe. Um diese Variation im Griff zu haben, wird die Dicke gemessen. Kurz bevor die Pakethöhe erreicht wird, wird aufgrund der Messung entschieden, ob die Pakethöhe korrigiert werden muss. Die Auswahl liegt darin, dass man entweder das Paket belässt, ein Blech dazu gibt oder am Schluss ein Blech weniger vorsieht.

Die Banddickenmessung findet jeweils vor dem Vorschub statt. Zum Messen gibt es verschiedene Systeme und Hersteller.

Die genauen Messsysteme haben entweder Diamantspitzen oder Laserköpfe. Bei breiten Bändern wird nicht nur an einem Punkt gemessen, sondern der Messkopf wird quer zum Band hin und her bewegt. Zur Bestimmung der Banddicke wird dann der Mittelwert genommen. Bei Verwendung von beschichteten Bändern können die Diamantspitzen nicht eingesetzt werden, da die Beschichtung zerstört würde.

Die weniger genauen Systeme haben Walzen. Es gibt eine untere feste Walze und eine obere bewegliche Walze, die mit einem Stössel verbunden ist. Die obere Walze wird mit einer definierten Kraft auf das Band gedrückt. Das Band ist dann zwischen den beiden Walzen eingespannt. Die Walzen werden zum Kalibrieren aufeinander gefahren (Null). Dann wird das Blechband eingelegt und dabei der Weg, um welchen die obere Walze angehoben wird als Banddicke ermittelt. Im Produktionslauf muss dann die Veränderung der Banddicke ermittelt werden, um die richtigen Massnahmen für die Pakethöhe zu treffen.

Grundsätzlich sind die Messungen mit Walzen sehr genau. Leider werden sie aber durch äussere Faktoren beeinflusst, wie z.B. Dreck oder Bandbeschichtungen. Beim Stanzen von Elektroblech werden gerne beschichtete Bänder verwendet. Durch die Beschichtung wird eine Isolationsschicht zwischen den einzelnen Blechen erreicht. Umso besser die Isolation zwischen den Blechen ist, umso besser wird das Magnetfeld von dem daraus gebildeten Motor. Darum ist es wichtig, dass in diesem Fall die Beschichtung auch intakt bleibt. Wenn nun mit Walzen gemessen wird, kommt es gerne vor, dass sich kleine Partikel der Bandbeschichtung auf den Walzen ablagern. Der Abtrag auf der Walze wird mit der Zeit immer dicker. Mit zunehmendem Partikelaufbau auf den Walzen wird die Messung immer ungenauer. Um eine permanent genaue Messung zu garantieren, müssten die Walzen sehr oft gereinigt werden, was in der Praxis nicht getan wird.

Weiteren Stand der Technik bilden die folgenden Dokumente:
DE 694 18 136 T2 offenbart Verfahren und Vorrichtungen zur Bestimmung der Papierdicke bei Druckern und Kopierern, wobei der Abstand zweier das Papier erfassender Walzen zur Dickenmessung verwendet wird.

JP 2012 030937 A offenbart ebenfalls Verfahren und Vorrichtungen zur Bestimmung der Papierdicke, wobei der Abstand zweier das Papier erfassender Walzen zur Dickenmessung verwendet wird.

US 3 540 247 A offenbart Vorrichtungen und Verfahren zur Messung der Dicke eines Materialbandes beim Aufrollen desselben auf eine Trommel. Dabei wird die Rotation der Trommel und die lineare Bandgeschwindigkeit zur Bestimmung der Banddicke herangezogen.

DE 11 26 830 B offenbart eine Vorschubvorrichtung zum schrittweisen Zu- und Abführen von Blechbändern an Pressen, Stanzen und dergleichen, mit zwei die Blechbänder zwischen sich klemmenden Walzen.

EP 2 211 138 A2 offenbart eine Einrichtung zur Dickenmessung von Platten, z.B. bei Breitbandschleifmaschinen, bei welcher die beiden Plattenaussenflächen mit gegeneinander gerichteten Sensoren mit Tastrollen abgetastet und dadurch in der Dicke vermessen werden.

### DARSTELLUNG DER ERFINDUNG

Es stellt sich deshalb die Aufgabe, eine technische Lösung zur Verfügung zu stellen, welche die zuvor beschriebenen Nachteile des Standes der Technik nicht aufweist oder zumindest teilweise vermeidet.

Diese Aufgabe wird durch die Gegenstände der unabhängigen Patentansprüche gelöst.

Gemäss diesen betrifft ein erster Aspekt der Erfindung ein Verfahren zum Ermitteln der Dicke eines Materialbandes beim Zuführen des Materialbandes zur Bearbeitungszone einer Werkzeugmaschine, bevorzugterweise zur Bearbeitungszone eines Stanzautomaten.

Zur Durchführung des Verfahrens wird eine Walzenanordnung mit zwei parallel und relativ zueinander senkrecht zu ihren Rotationsachsen aufeinander zu und voneinander weg bewegbaren Walzen bereitgestellt, welche anspruchsgemäss als erste Walze und zweite Walze bezeichnet werden. Mit Vorteil sind die Walzen relativ zueinander senkrecht zu ihren Rotationsachsen verschiebbar und dadurch aufeinander zu und voneinander weg bewegbar. Der anspruchsgemässe Begriff "Walzen" umfasst auch Rollen und andere Wälzkörper mit einer rotationssymmetrischen Form, mit einer Breite grösser, gleich oder kleiner als die Breite des zuzuführenden Materialbandes.

Vor dem bestimmungsgemässen Zuführen des Materialbandes zur Bearbeitungszone der Werkzeugmaschine und dem Messen der Banddicke werden verschiedene Referenz-Parameter ermittelt.

Zum einen werden die parallelen Walzen derart relativ zueinander positioniert, dass sich die beiden Walzen berühren (Abstand "Null"). In diesem Zustand wird die Relativposition der Walzen zueinander als Referenz-Relativposition ermittelt, was z.B. bei Walzenanordnungen mit einer feststehenden und einer beweglichen Walze dadurch geschehen kann, dass die Absolutposition der beweglichen Walze im feststehenden System ermittelt wird.

Zum anderen werden die beiden parallelen Walzen voneinander beabstandet und es wird ein Materialband derartig zwischen diesen angeordnet, dass das Materialband zwischen den Walzen eingespannt ist. Dieses Materialband kann das bestimmungsgemäss der Bearbeitungszone der Werkzeugmaschine zuzuführende Materialband sein, oder auch ein Materialband, welches lediglich bei der Ermittlung der Referenz-Parameter zum Einsatz kommt.

Das zwischen den Walzen eingespannte Materialband wird um eine bestimmte Vorschublänge unter einem schlupffreien Abrollen der Walzen auf der Bandoberfläche vorgeschoben. Die Walzen vollführen dabei eine Rotation um einen entsprechenden bestimmten Rotationswinkel, welcher einen der Vorschublänge entsprechenden Abschnitt des Walzenumfangs einschliesst. Die Vorschublänge kann der beim bestimmungsgemässen Zuführen des Materialbandes gewünschten Vorschublänge entsprechen, muss es aber nicht. Diese Vorschublänge wird als Referenz-Vorschublänge erfasst und der entsprechende Rotationswinkel der ersten Walze wird als erster Referenz-Rotationswinkel erfasst. Alternativ oder ergänzend kann auch das Verhältnis von der bestimmten Vorschublänge und dem bestimmten Rotationswinkel der ersten Walze als erstes Referenz-Vorschublängen/Rotationswinkel-Verhältnis erfasst, welches auf den Durchmesser der Walze im Referenzzustand schliessen lässt.

Nachdem die Referenz-Parameter erfasst sind wird, sofern nicht bereits für die Ermittlung der Referenz-Parameter das bestimmungsgemäss der Bearbeitungszone der Werkzeugmaschine zuzuführende Materialband zwischen den Walzen angeordnet wurde, dieses Materialband zwischen den Walzen derart angeordnet, dass die Bandlängsrichtung des Materialbands senkrecht zu den Rotationsachsen der Walzen verläuft und das Materialband zwischen den Walzen eingespannt ist.

Das zwischen den Walzen eingespannte Materialband wird nun bestimmungsgemäss dem Bearbeitungsbereich der Werkzeugmaschine zugeführt, indem es intervallweise vorgeschoben wird, wobei die Walzen intervallweise eine Rotation um einen der Vorschublänge entsprechenden Rotationswinkel vollführen.

Dabei wird für jedes Vorschubintervall die Relativposition der Walzen zueinander erfasst, was z.B. bei Walzenanordnungen mit einer feststehenden und einer beweglichen Walze dadurch geschehen kann, dass die Absolutposition der beweglichen Walze im feststehenden System ermittelt wird.

Zudem wird für jedes Vorschubintervall der Rotationswinkel der ersten Walze, die erreichte Vorschublänge und/oder das Verhältnis von der Vorschublänge und dem Rotationswinkel der ersten Walze erfasst.

Sofern die Vorschublänge immer exakt konstant auf einem Sollwert gehalten werden kann, z.B. bei Verwendung von Stanzwerkzeugen mit Pilotierstiften, welche am Ende der Vorschubbewegung in Pilotieröffnungen im Materialband eingefahren werden, kann auf eine Ermittlung der aktuellen Vorschublänge in jedem Vorschubintervall verzichtet werden und stattdessen eine bekannte Soll-Vorschublänge verwendet werden.

Sodann wird für jedes Vorschubintervall die aktuell erfasste Vorschublänge mit der Referenz-Vorschublänge verglichen (sofern nicht wie zuvor beschrieben eine bekannte und genau eingehaltene Soll-Vorschublänge verwendet wird), der aktuell erfasste Rotationswinkel der ersten Walze mit dem ersten Referenz-Rotationswinkel verglichen und/oder das aktuell erfasste Verhältnis von der Vorschublänge und dem Rotationswinkel der ersten Walze mit dem ersten Referenz-Vorschublängen/Rotationswinkel-Verhältnis verglichen.

Aus der Differenz zwischen der Referenz-Relativposition und der aktuell ermittelten Relativposition der Walzen zueinander, welche dem Abstand der beiden Walzen zueinander entspricht sofern die Walzen Durchmesser aufweisen die identisch sind zu ihren Durchmessern bei der Erfassung der Referenz-Relativposition, wird sodann die Dicke des Materialbandes berechnet.

Weicht die aktuell erfasste Vorschublänge von der Referenz-Vorschublänge ab, der aktuell erfasste Rotationswinkel der ersten Walze von dem ersten Referenz-Rotationswinkel ab und/oder das aktuell erfasste Verhältnis von der Vorschublänge und dem Rotationswinkel der ersten Walze von dem ersten Referenz-Vorschublängen/Rotationswinkel-Verhältnis ab, so wird dabei die ermittelte Vorschublängenabweichung, die ermittelte Rotationswinkelabweichung und/oder die ermittelte Vorschublängen/Rotationswinkel-Verhältnis-Abweichung über den Zusammenhang zwischen dem Walzendurchmesser, dem Rotationswinkel und der Vorschublänge in eine allfällige Abweichung des Durchmessers der ersten Walze von deren Durchmesser beim Erfassen der Referenz-Relativposition umgerechnet und bei der Berechnung der Dicke des Materialbands berücksichtigt.

Dies kann z.B. dadurch geschehen, dass die aktuell ermittelte Relativposition der Walzen für die Berechnung der Dicke des Materialbands unter Berücksichtigung dieser Durchmesserabweichung korrigiert wird oder das eine aus der aktuell ermittelten Relativposition der Walzen berechnete Dicke des Materialbands unter Berücksichtigung dieser Durchmesserabweichung korrigiert wird

Der Durchmesser der ersten Walze beim Erfassen der Referenz-Relativposition ergibt sich über den Zusammenhang zwischen dem Walzendurchmesser und der Vorschublänge aus der Referenz-Vorschublänge und dem ersten Referenz-Rotationswinkel oder aus dem ersten Referenz-Vorschublängen/Rotationswinkel-Verhältnis.

Mit anderen Worten gesagt betrifft die Erfindung ein Verfahren zum Ermitteln der Dicke eines Materialbandes beim Zuführen des Materialbandes zur Bearbeitungszone einer Werkzeugmaschine, bei welchem Verfahren das Materialband zwischen zwei rotierbaren Walzen eingespannt wird, deren Relativposition zueinander im ursprünglichen Zustand bei sauberen Walzen und Walzenabstand "Null" erfasst wurde (Referenz-Relativposition)und deren Relativposition zueinander im bestimmungsgemässen Vorschubbetrieb für jedes Vorschubintervall erfasst wird (aktuelle Relativposition). Die Differenz zwischen der aktuellen Relativposition und der Referenz-Relativposition, welche bei sauberen Walzen im ursprünglichen Zustand die Dicke des Bandmaterials ergibt, wird erfindungsgemäss um etwaige z.B. durch Verschmutzung aufgetretene Durchmesserveränderungen der Walzen korrigiert. Hierzu werden im ursprünglichen Zustand bei sauberen Walzen vorgängig in einem Referenzvorschubbetrieb zusätzlich für mindestens eine der Walzen bei einer erfassten Referenz-Vorschublänge ein zugeordneter Referenz-Rotationswinkel der Walze erfasst, so dass das ursprüngliche Verhältnis Vorschublänge/Rotationswinkel für diese Walze bekannt ist und damit auch deren ursprünglicher Durchmesser klar definiert ist. Ergeben sich im bestimmungsgemässen Vorschubbetrieb Abweichungen von diesen Parametern, so werden die Abweichungen in eine Durchmesserveränderung der mindestens einen Walze umgerechnet und bei der Berechnung der Dicke des Materialbands berücksichtigt.

Durch die Erfindung wird es möglich, die eingangs geschilderten Probleme bei Banddickenmessungen mit Walzen zu beheben.

Bevorzugterweise wird auch eine allfällige Durchmesserveränderung der zweiten Walze bei der Berechnung der Dicke des Materialbands berücksichtigt.

In einer ersten bevorzugten Variante erfolgt dies in analoger Weise wie für die erste Walze. Bei der Ermittlung der Referenz-Parameter wird also zusätzlich für die zweite Walze ein zweiter Referenz-Rotationswinkel und/oder ein zweites Referenz-Vorschublängen/Rotationswinkel-Verhältnis erfasst.

Sodann wird beim intervallweisen Vorschieben für jedes Vorschubintervall zusätzlich der Rotationswinkel der zweiten Walze mit dem zweiten Referenz-Rotationswinkel und/oder das Verhältnis von der Vorschublänge und dem Rotationswinkel der zweiten Walze mit dem zweites Referenz-Vorschublängen/Rotationswinkel-Verhältnis verglichen. Für den Fall, dass der aktuell erfasste Rotationswinkel der zweiten Walze von dem zweiten Referenz-Rotationswinkel abweicht und/oder das aktuell erfasste Verhältnis von der Vorschublänge und dem Rotationswinkel der zweiten Walze von dem zweiten Referenz-Vorschublängen/Rotationswinkel-Verhältnis abweicht, wird die ermittelte Rotationswinkelabweichung der zweiten Walze und/- oder die ermittelte Vorschublängen/Rotationswinkel-Verhältnis-Abweichung über den Zusammenhang zwischen dem Walzendurchmesser, dem Rotationswinkel und der Vorschublänge in eine allfällige Abweichung des Durchmessers der zweite Walze von deren Durchmesser beim Erfassen der Referenz-Relativposition umgerechnet und bei der Berechnung der Dicke des Materialbands berücksichtigt.

Dies kann z.B. dadurch geschehen, dass die aktuell ermittelte Relativposition der Walzen für die Berechnung der Dicke des Materialbands unter Berücksichtigung dieser Durchmesserabweichung korrigiert wird oder das eine aus der aktuell ermittelten Relativposition der Walzen berechnete Dicke des Materialbands unter Berücksichtigung dieser Durchmesserabweichung korrigiert wird

Der Durchmessers der zweiten Walze beim Erfassen der Referenz-Relativposition ergibt sich über den Zusammenhang zwischen dem Walzendurchmesser und der Vorschublänge aus der Referenz-Vorschublänge und dem zweiten Referenz-Rotationswinkel oder aus dem zweiten Referenz-Vorschublängen/Rotationswinkel-Verhältnis. Auf diese Weise lässt sich eine besonders genaue Banddickenmessung realisieren.

In einer zweiten bevorzugten Variante wird davon ausgegangen, dass sich der Durchmesser der zweiten Walze über die Betriebszeit identisch verändert wie der Durchmesser der ersten Walze.

Wird festgestellt, dass die aktuell erfasste Vorschublänge von der Referenz-Vorschublänge abweicht, der aktuell erfasste Rotationswinkel der ersten Walze von dem ersten Referenz-Rotationswinkel abweicht und/oder das aktuell erfasste Verhältnis von der Vorschublänge und dem Rotationswinkel der ersten Walze von dem ersten Referenz-Vorschublängen/Rotationswinkel-Verhältnis abweicht und deshalb die ermittelte Vorschublängenabweichung, die ermittelte Rotationswinkelabweichung und/oder die ermittelte Vorschublängen/Rotationswinkel-Verhältnis-Abweichung über den Zusammenhang zwischen dem Walzendurchmesser, dem Rotationswinkel und der Vorschublänge in eine allfällige Abweichung des Durchmessers der ersten Walze von deren Durchmesser beim Erfassen der Referenz-Relativposition umgerechnet, so wird davon ausgegangen, dass der Walzendurchmesser der zweiten Walze eine identische Abweichung von deren Durchmesser beim Erfassen der Referenz-Relativposition aufweist und es wird bei der Berechnung der Dicke des Materialbands nicht nur die errechnete Durchmesserabweichung der ersten Walze berücksichtigt, sondern auch die angenommene Durchmesserabweichung der zweiten Walze.

Dies kann z.B. dadurch geschehen, dass die aktuell ermittelte Relativposition der Walzen für die Berechnung der Dicke des Materialbands unter Berücksichtigung dieser Durchmesserabweichungen korrigiert wird oder das eine aus der aktuell ermittelten Relativposition der Walzen berechnete Dicke des Materialbands unter Berücksichtigung dieser Durchmesserabweichungen korrigiert wird

Auf diese Weise lässt sich eine relativ genaue Banddickenmessung mit weniger anlagetechnischem Aufwand als bei der ersten Variante realisieren.

In einer bevorzugten Ausführungsform des Verfahrens ist die Rotationsachse einer der Walzen, bevorzugterweise der anspruchsgemässen zweiten Walze, ortsfest (feststehend) und die Rotationsachse der anderen Walze verschiebbar oder verschwenkbar (beweglich), und zwar senkrecht zur Rotationsachse und im Wesentlichen senkrecht zur Durchlaufrichtung des Materialbandes. Hierdurch können relativ einfache Vorrichtungen zur Durchführung des Verfahrens verwendet werden.

In einer weiteren bevorzugten Ausführungsform des Verfahrens ist mindestens eine der Walzen angetrieben und beide Walzen dienen zusammen dem intervallweisen Vorschieben des Materialbandes. Die Walzen mit denen die Banddickenmessung durchgeführt wird sind also gleichzeitig die Vorschubwalzen einer Bandvorschubvorrichtung. Hierdurch kann der anlagentechnische Aufwand möglichst klein gehalten werden und es werden kompakte Lösungen möglich.

In noch einer weiteren bevorzugten Ausführungsform des Verfahrens wird für die Erfassung der Relativpositionen der Walzen zueinander die Position der dem Bandmaterial abgewandten Aussenfläche mindestens einer der Walzen ermittelt, und zwar mit Vorteil zumindest der anspruchsgemässen ersten Walze. Diese Aussenfläche ist typischerweise gut erreichbar und eine Veränderung des Durchmessers der Walze durch Ablagerungen lässt sich so 1:1 als Veränderung der Relativposition dieser Aussenfläche der Walze detektieren.

In einer anderen bevorzugten Ausführungsform des Verfahrens wird für die Erfassung der Relativpositionen der Walzen zueinander die Position einer mit der Lagerung zumindest einer der Walzen verbundenen Körperlichkeit ermittelt, bevorzugterweise einer mit der Lagerung der ersten Walze verbundenen Körperlichkeit. Die Position derartiger Bauteile kann sehr zuverlässig ermittelt werden und eine Veränderung des Radius der Walze durch Ablagerungen lässt sich so 1:1 als Veränderung der Position dieser Bauteile detektieren. Entsprechend ist die Veränderung des Durchmessers der Walze durch Ablagerungen doppelt so gross wie die Veränderung der Position dieser Bauteile.

Bei den beiden zuvor erwähnten Ausführungsformen ist es von Vorteil, dass für die Ermittlung der Position der dem Bandmaterial abgewandten Aussenfläche der jeweiligen Walze bzw. der mit der Lagerung der jeweiligen Walze verbundenen Körperlichkeit ein oder mehrere berührungslose Distanzmesssensoren verwendet werden, und zwar bevorzugterweise Wirbelstromsensoren, kapazitive Sensoren oder Lasermesseinrichtungen, insbesondere konfokale Lasermesssysteme. Derartige Sensoren sind kostengünstig erhältlich und ermöglichen eine hochpräzise Positionsermittlung.

Auch ist es bei den beiden zuvor erwähnten Ausführungsformen von Vorteil, dass die Ermittlung der Position der dem Bandmaterial abgewandten Aussenfläche der jeweiligen Walze bzw. der mit der Lagerung der jeweiligen Walze verbundenen Körperlichkeit an mehreren Stellen erfolgt, bevorzugterweise im Bereich der beiden Enden der jeweiligen Walze. Hierdurch wird eine besonders genaue Positionsermittlung möglich.

In noch einer weiteren bevorzugten Ausführungsform des erfindungsgemässen Verfahrens wird das Materialband mit Pilotieröffnungen versehen und zur Erfassung der Vorschublänge des Bandmaterials wird jeweils die Position einer Pilotieröffnung ermittelt. Dies geschieht mit Vorteil über einen Zeilensensor. Auf diese Weise ist eine hochpräzise Bestimmung der Vorschublänge möglich.

Weiter ist es bevorzugt, dass das Verfahren bei einer Stanzpresse zum Einsatz kommt, wobei das Materialband, dessen Dicke ermittelt wird, einem Werkzeug zur Herstellung von Blechstapeln zugeführt wird und wobei die ermittelten Banddicken zur Bestimmung der Stapelhöhe verwendet werden. Bei derartigen Anwendungen des Verfahrens treten die Vorteile der Erfindung besonders deutlich zu Tage.

Ein zweiter Aspekt der Erfindung betrifft eine Walzenanordnung zur Verwendung bei der Durchführung des Verfahrens gemäss dem ersten Aspekt der Erfindung.

Die Walzenanordnung umfasst mindestens ein Paar von Walzen, zwischen denen das Materialband eingespannt werden kann, sowie Einrichtungen zur Erfassung der Relativposition der Walzen zueinander und des Rotationswinkels zumindest einer der Walzen. Der anspruchsgemässe Begriff "Walzen" umfasst auch Rollen und andere Wälzkörper mit einer rotationssymmetrischen Form, mit einer Breite grösser, gleich oder kleiner als die Breite des zuzuführenden Materialbandes.

Mit derartigen Walzenanordnungen wird die Durchführung des erfindungsgemässen Verfahrens deutlich vereinfacht.

In einer bevorzugten Ausführungsform umfasst die Walzenanordnung mindestens ein Paar von Walzen, zwischen denen das Materialband eingespannt werden kann und mit denen es durch intervallweises Rotieren der Walzen intervallweise vorgeschoben werden kann. Es handelt sich hier also um sogenannte Vorschubwalzen. Weiter umfasst die Walzenanordnung Einrichtungen mit denen für jedes Vorschubintervall die Relativposition der Walzen zueinander und der Rotationswinkel zumindest einer der Walzen erfasst werden kann. Mit derartigen Walzenanordnungen wird die Durchführung des erfindungsgemässen Verfahrens insbesondere bei Stanzpressen deutlich vereinfacht.

Mit Vorteil sind die Einrichtungen zur Erfassung der Relativposition der Walzen zueinander ausgebildet zur Ermittlung der Position der dem Bandmaterial abgewandten Aussenfläche mindestens einer der Walzen oder zur Ermittlung der Position einer mit der Lagerung zumindest einer der Walzen verbundenen Körperlichkeit. Hierdurch wird eine relativ einfache und zuverlässige quantitative Ermittlung einer Veränderung des Durchmessers bzw. des Radius der Walze durch Ablagerungen möglich.

Auch ist es bevorzugt, dass die Einrichtungen für die Ermittlung der Position der dem Bandmaterial abgewandten Aussenfläche der jeweiligen Walze und/oder der mit der Lagerung der jeweiligen Walze verbundenen Körperlichkeit ein oder mehrere berührungslose Distanzmesssensoren aufweisen, und zwar bevorzugterweise Wirbelstromsensoren, kapazitive Sensoren oder Lasermesseinrichtungen, insbesondere konfokale Lasermesssysteme. Derartige Sensoren sind kostengünstig erhältlich und ermöglichen eine hochpräzise Positionsermittlung.

Bevorzugterweise sind die Einrichtungen zur Erfassung der Relativposition der Walzen zueinander derartig ausgebildet, dass die Ermittlung der Position der dem Bandmaterial abgewandten Aussenfläche der jeweiligen Walze und/oder der mit der Lagerung der jeweiligen Walze verbundenen Körperlichkeit an mehreren Stellen erfolgen kann, mit Vorteil im Bereich der beiden Enden der jeweiligen Walze. Hierdurch wird eine besonders genaue Positionsermittlung möglich.

Ein dritter Aspekt der Erfindung betrifft einen Vorschubapparat mit einer Walzenanordnung gemäss dem zweiten Aspekt der Erfindung.

Ein vierter Aspekt der Erfindung betrifft eine Werkzeugmaschine zur Durchführung des Verfahrens gemäss dem ersten Aspekt der Erfindung, mit einer Walzenanordnung gemäss dem zweite Aspekt der Erfindung oder einem Vorschubapparat gemäss dem dritten Aspekt der Erfindung.

Dabei ist es bevorzugt, dass die Werkzeugmaschine eine Stanzpresse mit einem Werkzeug zur Herstellung von Blechstapeln ist.

Bei derartigen Werkzeugmaschinen treten die Vorteile der Erfindung besonders deutlich zu Tage.

### KURZE BESCHREIBUNG DER ZEICHNUNGEN

Weitere bevorzugte Ausführungen der Erfindung ergeben sich aus den abhängigen Ansprüchen und aus der nun folgenden Beschreibung anhand der Figuren. Diese zeigen:
Fig. 1 eine Vorderansicht eines Stanzautomaten zur Verarbeitung von Bandmaterial;
Fig. 2 einen Vertikalschnitt durch eine Walzenanordnung zur Ermittlung der Banddicke gemäss dem Stand der Technik;
Fig. 3 eine Prinzipskizze zur Erläuterung einer bevorzugten Ausführungsform des erfindungsgemässen Verfahrens;
Fig. 4 eine Seitenansicht einer ersten erfindungsgemässen Walzenanordnung;
Fig. 5 einen Vertikalschnitt entlang der Linie A-A in Fig. 4;
Fig. 6 eine Seitenansicht einer zweiten erfindungsgemässen Walzenanordnung; und
Fig. 7 einen Vertikalschnitt entlang der Linie B-B in Fig. 6.

### WEGE ZUR AUSFÜHRUNG DER ERFINDUNG

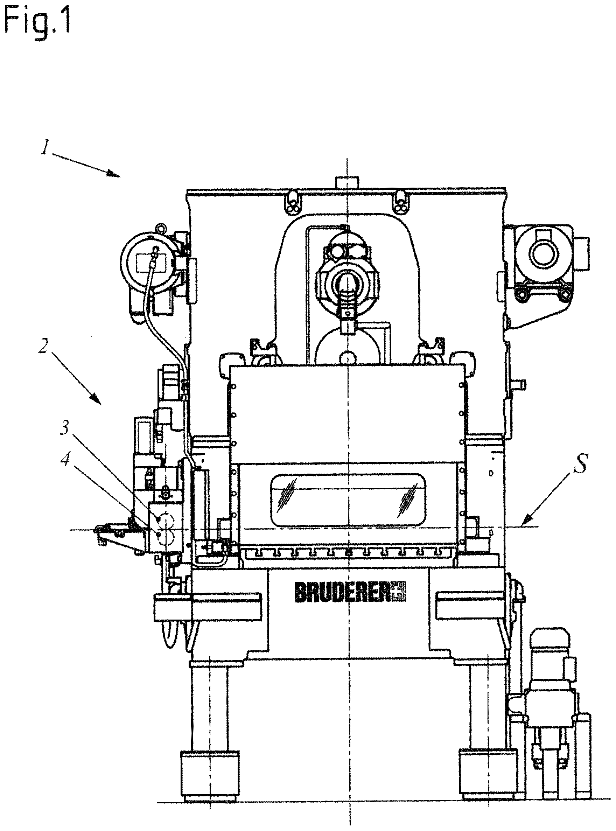

Fig. 1 zeigt die Vorderansicht eines Stanzautomaten 1 zur Verarbeitung von Bandmaterial zu Elektroblechstapeln.

Wie zu erkennen ist, weist der Stanzautomat 1 auf seiner Einlaufseite einen Vorschubapparat 2 mit einer Walzenanordnung umfassend eine obere Vorschubwalze 3 und eine untere Vorschubwalze 4 auf, mittels welchen das Bandmaterial (nicht dargestellt) in der Bandlaufebene S zu der Bearbeitungszone des Stanzautomaten 1 zugeführt wird.

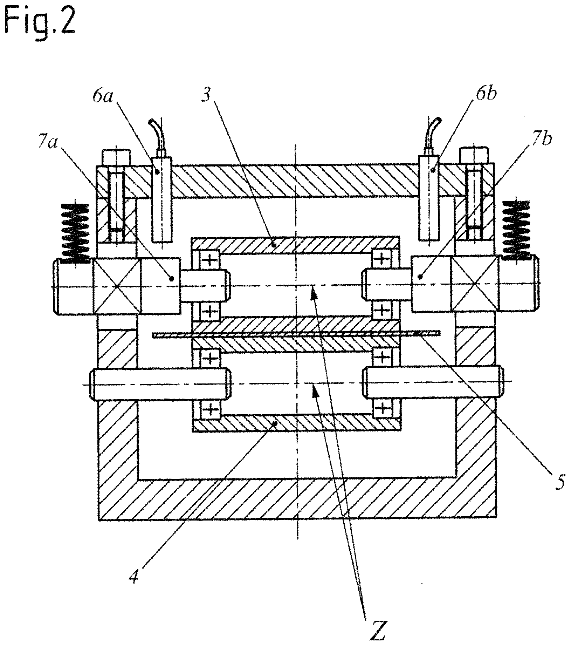

Fig. 2 zeigt einen Vertikalschnitt durch eine Walzenanordnung eines Vorschubapparates, bei welchem die Banddicke gemäss dem Stand der Technik wie eingangs beschrieben ermittelt wird.

In der hier dargestellten Situation ist das Materialband 5 zwischen der unteren feststehenden Walze 4 und der oberen beweglichen Walze 3 des Vorschubapparates angeordnet, wobei die obere Walze 3 mit einer definierten Kraft auf das Band 5 gedrückt wird, so dass das Band 5 zwischen den beiden Walzen 3, 4 eingespannt ist. Mit den Distanzmesssensoren 6a, 6b wird die Position der Lagerzapfen 7a, 7b der beweglichen oberen Walze 3 ermittelt, und zwar zum Kalibrieren ohne Materialband 5 bei aufeinander aufliegenden Walzen 3, 4 und sodann bei zwischen den Walzen 3, 4 angeordnetem Materialband 5, wie hier in Fig. 2 dargestellt. Die ermittelte Position bei aufeinander aufliegenden Walzen 3, 4 verkörpert somit eine Referenz-Relativposition der Walzen zueinander bei Banddicke "Null", und die ermittelte Position bei zwischen den Walzen 3, 4 angeordnetem Materialband verkörpert eine Relativposition der Walzen 3, 4 zueinander, welche die aktuelle Banddicke repräsentiert. Die Differenz der beiden ermittelten Positionen bzw. der Relativpositionen der Walzen 3, 4 zueinander wird als Banddicke ermittelt, mit den eingangs erwähnten Problemen bei einer Veränderung der Walzendurchmesser infolge von Verschmutzungen.

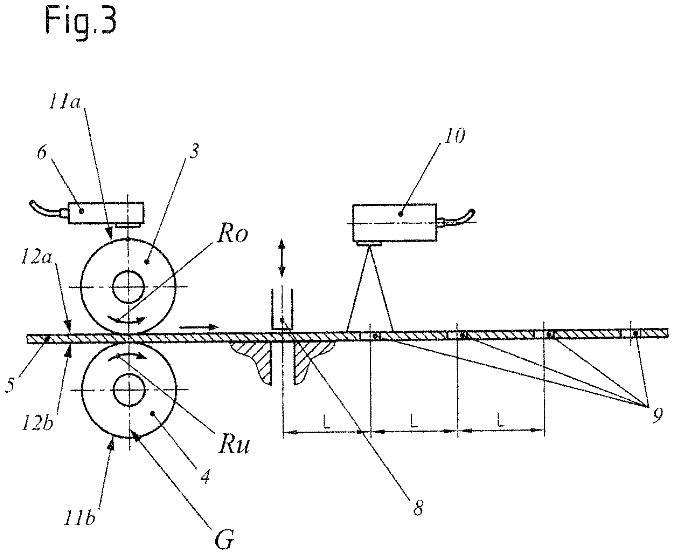

Fig. 3 zeigt eine Prinzipskizze zur Erläuterung einer bevorzugten Ausführungsform des erfindungsgemässen Verfahrens zur Ermittlung der Dicke eines Materialbandes 5 beim Zuführen des Materialbandes 5 zur Bearbeitungszone einer Werkzeugmaschine.

Zur Durchführung des Verfahrens werden zwei parallel und relativ zueinander senkrecht zu ihren Rotationsachsen aufeinander zu und voneinander weg bewegbare Walzen 3, 4 einer Walzenanordnung bereitgestellt. Die Rotationsachsen der Walzen 3, 4 verlaufen horizontal und die Walzen 3, 4 sind senkrecht übereinander angeordnet, so dass sich eine obere Walze 3 und eine untere Walze 4 ergibt. Die Walzen 3, 4 weisen einen identischen Walzendurchmesser auf.

Vorgängig zu dem bestimmungsgemässen Zuführen des Materialbandes zur Bearbeitungszone der Werkzeugmaschine, welches in Fig. 3 dargestellt ist, und dem Messen der Banddicke werden verschiedene Referenz-Parameter ermittelt.

Dabei werden zum einen die Walzen 3, 4 derart relativ zueinander positioniert, dass sich ihre Aussenflächen 11a, 11b berühren. In diesem Zustand wird die Relativposition der Walzen 3, 4 zueinander als Referenz-Relativposition ermittelt. Hierzu ist ein berührungsloser Distanzmesssensor 6 in Form einer Lasermesseinrichtung vorhanden, mit welchem die Position der dem Bandmaterial 5 abgewandten Aussenfläche 11a der oberen Walze 3 ermittelt wird, indem der Abstand zwischen dem Sensor 6 und der Aussenfläche 11a der oberen Walze 3 entlang einer Geraden G, welche durch die Rotationsachsen beider Walzen 3, 4 verläuft, gemessen wird. Im vorliegenden Fall sind die Rotationsachse der untere Walze 4 und der Sensor 6 ortsfest (feststehend), so dass für diese Referenzmessung mit den Walzen 3, 4 im sauberen Ursprungszustand die mit dem Sensor 6 gemessene Distanz bis zur Aussenfläche 11a der oberen Walze 3 eine Relativposition der Walzen 3, 4 zueinander bei einem Walzenabstand "Null" repräsentiert.

Zum anderen werden die Walzen 3, 4 voneinander beabstandet und es wird ein Materialband 5 derartig zwischen diesen angeordnet, dass das Materialband 5 zwischen den Walzen 3, 4 eingespannt ist. Dieses Materialband 5 ist im vorliegenden Fall das bestimmungsgemäss der Bearbeitungszone der Werkzeugmaschine zuzuführende Materialband 5. Es kann für die Ermittlung der Referenz-Parameter aber auch ein anderes Materialband verwendet werden.

Das zwischen den Walzen 3, 4 eingespannte Materialband 5 wird um eine bestimmte Vorschublänge L unter einem schlupffreien Abrollen der Walzen 3, 4 auf der Bandoberfläche 12a, 12b vorgeschoben. Die Walzen 3, 4 vollführen dabei eine Rotation um einen entsprechenden bestimmten Rotationswinkel Ro, Ru, welcher einen der Vorschublänge L entsprechenden Abschnitt des Walzenumfangs einschliesst. Diese Referenz-Vorschublänge entspricht im vorliegenden Fall der beim bestimmungsgemässen Zuführen des Materialbandes gewünschten Vorschublänge L. Es kann für die Ermittlung der Referenz-Parameter aber auch eine andere Vorschublänge gewählt werden. Diese Vorschublänge L wird als Referenz-Vorschublänge erfasst und der entsprechende Rotationswinkel Ro der oberen Walze 3 wird als Referenz-Rotationswinkel erfasst.

Nachdem im sauberen Ursprungszustand der Walzen 3, 4 die Referenz-Relativposition der Walzen 3, 4 zueinander bei einem Walzenabstand "Null" sowie die Referenz-Vorschublänge und der zugehörige Referenz-Rotationswinkel ermittelt sind, wird das zwischen den Walzen 3, 4 eingespannte Materialband 5 bestimmungsgemäss dem Bearbeitungsbereich der Werkzeugmaschine zugeführt, indem es intervallweise jeweils um die gewünschte Vorschublänge L vorgeschoben wird. Diese Situation ist in Fig. 3 skizziert.

Die Walzen 3, 4 rollen beim intervallweisen Vorschieben des Materialbandes 5 schlupffrei auf der Bandoberfläche ab und vollführen entsprechend beim intervallweisen Vorschieben des Materialbandes 5 jeweils intervallweise eine Rotation um einen zur Vorschublänge L korrespondierenden Rotationswinkel Ru, Ro.

In der Vorschubpause zwischen zwei Vorschubintervallen erfolgt jeweils die Stanzbearbeitung des Materialbandes 5 mit dem Stanzautomaten. Dabei wird auch jeweils eine Pilotieröffnung 9 mit einem ortsfesten Stanzwerkzeug 8 in das Materialband 5 eingebracht, welche im darauf folgenden Vorschubintervall zur Bestimmung der aktuellen Vorschublänge L dient. Hierzu ist ein Zeilensensor 10 vorhanden, mit welchem zur Erfassung der Vorschublänge L des Bandmaterials 5 jeweils die Position der letzten Pilotieröffnung 9 ermittelt wird. Die Vorschublänge L entspricht dem Abstand zwischen der bekannten Position der Pilotieröffnung 9 bei deren Erzeugung mit dem Stanzwerkzeug 8 und der mit dem Zeilensensor 10 ermittelten Position der Pilotieröffnung 9 nach dem Vorschieben des Bandmaterials 5.

Auch wird im bestimmungsgemässen Vorschubbetrieb für jedes Vorschubintervall die Relativposition der Walzen 3, 4 zueinander mit dem Sensor 12 erfasst sowie der Rotationswinkel Ro der oberen Walze 3. Letztgenanntes erfolgt über einen Winkelencoder an der Welle der oberen Walze 3 (nicht dargestellt).

Für jedes Vorschubintervall wird sodann die aktuell erfasste Vorschublänge L mit der Referenz-Vorschublänge und der aktuell erfasste Rotationswinkel Ro der oberen Walze 3 mit dem Referenz-Rotationswinkel verglichen.

Aus der Differenz zwischen der Referenz-Relativposition und der aktuell mit dem Sensor 6 ermittelten Relativposition der Walzen 3, 4 zueinander bzw. aus der Differenz der Abstände zwischen dem Sensor 6 und der Aussenfläche 11a der oberen Walze 3 bei der Referenzmessung und bei der aktuellen Messung, welche Differenz dem Abstand der beiden Walzen 3, 4 zueinander und damit der Banddicke entspricht, sofern die aktuellen Durchmesser der Walzen 3, 4 identisch sind zu ihren Durchmessern im sauberen Ursprungszustand bei der Erfassung der Referenz-Parameter, wird sodann die Dicke des Materialbandes berechnet.

Weicht die aktuell erfasste Vorschublänge L von der Referenz-Vorschublänge ab und/oder der aktuell erfasste Rotationswinkel Ro der oberen Walze 3 von dem Referenz-Rotationswinkel ab, so wird davon ausgegangen, dass sich der Durchmesser beider Walzen 3, 4 seit der Ermittlung der Referenz-Relativposition verändert hat, und zwar bei beiden Walzen 3, 4 in identischer Weise.

In diesem Fall wird die ermittelte Vorschublängenabweichung und/oder die ermittelte Rotationswinkelabweichung über den Zusammenhang zwischen dem Walzendurchmesser, dem Rotationswinkel und der Vorschublänge in eine allfällige Abweichung, insbesondere Zunahme, des Durchmessers der oberen Walze 3 von deren Durchmesser beim Erfassen der Referenz-Relativposition umgerechnet, und die aus der Differenz zwischen der Referenz-Relativposition und der aktuell mit dem Sensor 12 ermittelten Relativposition der Walzen 3, 4 berechnete theoretische Banddicke wird um die Durchmesserabweichung korrigiert.

Der Durchmessers der oberen Walze 3 beim Erfassen der Referenz-Relativposition ergibt sich über den Zusammenhang zwischen dem Walzendurchmesser und der Vorschublänge aus der Referenz-Vorschublänge und dem Referenz-Rotationswinkel. Der Durchmesser der unteren Walze 4 war zum Zeitpunkt der Erfassung der Referenz-Relativposition identisch mit dem der oberen Walze 3.

Weiter wird angenommen, dass die untere Walze 4 eine identische Durchmesserabweichung, insbesondere Durchmesserzunahme, erfahren hat, und die aus der Differenz zwischen der Referenz-Relativposition und der aktuell mit dem Sensor 6 ermittelten Relativposition der Walzen 3, 4 berechnete theoretische Banddicke wird zusätzlich zur Berücksichtigung dieser angenommenen Durchmesserabweichung der unteren Walze 4 noch um die halbe Durchmesserabweichung der oberen Walze 3 korrigiert. Dies, weil die untere feststehende Walze 4 unterhalb des Materialbandes 5 angeordnet ist und eine Durchmesserzunahme dieser Walze 4 nur zur Hälfte zu einer Veränderung der Position der oberen Walze 3 beiträgt.

Die aus der Differenz zwischen der Referenz-Relativposition und der aktuell mit dem Sensor 12 ermittelten Relativposition der Walzen 3, 4 berechnete theoretische Banddicke wird also insgesamt um das Anderthalbfache der Durchmesserabweichung der oberen Walze 3 korrigiert. Dies sei mit Zahlen an folgendem Beispiel erläutert:
Bei der Ermittlung der Referenz-Parameter wurde als Referenz-Relativposition der Walzen 3, 4 zueinander (Walzenabstand "Null") eine Distanz zwischen der Aussenfläche 11a der oberen Walze 3 und dem Distanzmesssensor 6 von 32 mm ermittelt. Zudem wurde bei einem Referenz-Rotationswinkel der oberen Walze 3 von 90 Grad eine Referenz-Vorschublänge von 31.42 mm ermittelt. Aus diesen Werten kann ohne weiteres über den Zusammenhang zwischen dem Walzendurchmesser, dem Rotationswinkel und der Vorschublänge berechnet werden, dass der Durchmesser der oberen Walze 3 zum Zeitpunkt der Ermittlung der Referenz-Relativposition 40 mm betragen hat.

Für das betrachtete Vorschubintervall im bestimmungsgemässen Vorschubbetrieb wurde ein Rotationswinkel Ro der oberen Walze von 90 Grad, eine Vorschublänge L von 31.49 mm und eine aktuelle Relativposition der Walzen 3, 4 mit einer Distanz zwischen der Aussenfläche 11a der oberen Walze 3 und dem Distanzmesssensor 6 von 32 mm ermittelt.

Entsprechend ist die aktuell ermittelte Vorschublänge L um 0.07 mm grösser als die Referenz-Vorschublänge und die Differenz zwischen der Referenz-Relativposition und der aktuell ermittelten Relativposition der Walzen 3, 4 zueinander beträgt 0.415 mm. Diese Differenz entspricht der Banddicke für den Fall, dass die Durchmesser der beiden Walzen 3, 4 aktuell identisch mit deren Durchmessern bei der Ermittlung der Referenz-Relativposition wären (theoretische Banddicke).

Über den Zusammenhang zwischen dem Walzendurchmesser, dem Rotationswinkel und der Vorschublänge ergibt sich jedoch ein aktueller Walzendurchmesser der oberen Walze 3 von 40.1 mm, also eine Durchmesserzunahme gegenüber dem Referenzzustand von 0.1 mm. Zudem wird davon ausgegangen, dass sich auch der Durchmesser der unteren Walze 4 in gleichem Masse verändert hat, also ebenfalls um 0.1 mm zugenommen hat.

Um diese Durchmesserabweichungen bei der Berechnung der Dicke des Materialbandes 5 zu berücksichtigen, wird nun für die obere Walze 3 deren Durchmesserzunahme von 0.1 mm und für die untere Walze die Hälfte von deren angenommener Durchmesserzunahme, also 0.05 mm, von der theoretischen Banddicke von 0.415 mm abgezogen, und es ergibt sich eine entsprechend korrigierte tatsächliche Banddicke von 0.4 mm.

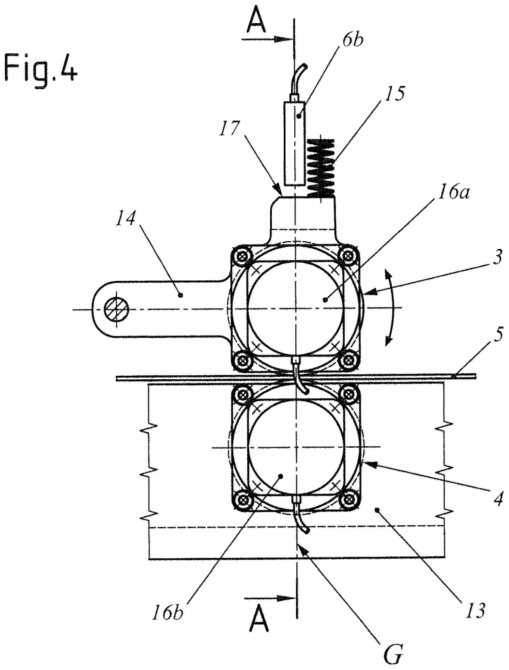

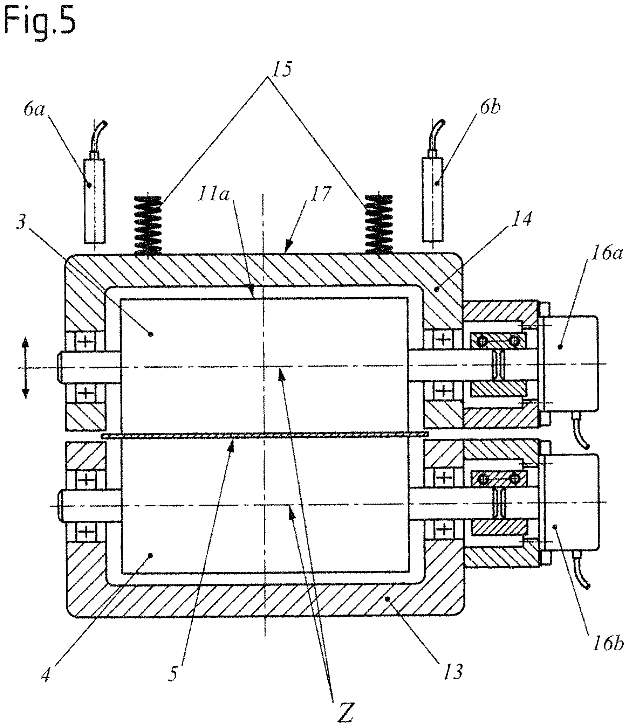

Die Figuren 4 und 5 zeigen eine erfindungsgemässe Walzenanordnung zur Verwendung bei der Durchführung einer weiteren bevorzugten Ausführungsform des erfindungsgemässen Verfahrens, und zwar einmal in der Seitenansicht (Fig. 4) und einmal im Vertikalschnitt entlang der Linie A-A in Fig. 4 (Fig. 5).

Diese Walzenanordnung umfasst zwei parallele Walzen 3, 4, eine obere Walze 3 und eine untere Walze 4, zwischen denen das Materialband 5 eingespannt wird. Die Walzen 3, 4 sind identisch und die untere Walze 4 ist in einer feststehenden Struktur 13 gelagert, während die obere Walze 3 in einer Schwinge 14 gelagert ist, so dass sie gegenüber der unteren Walze 4 verschwenkbar ist. Dabei wird sie durch die Schwerkraft und die Kraft zweier Federn 15 in Richtung auf die untere Walze 4 zu beaufschlagt, wodurch das Materialband 5 mit einer bestimmten Druckkraft zwischen den Walzen 3, 4 eingespannt wird.

An den Enden der Lagerwellen der Walzen 3, 4 sind Drehwinkelencoder 16a, 16b angeordnet, zur Überwachung der Drehwinkellage der Walzen 3, 4 zwecks Bestimmung der Rotationswinkel der Walzen 3, 4.

Auf der Oberseite der Schwinge 14, direkt oberhalb der Rotationsachse der oberen Walze 3, sind im Bereich der Enden der oberen Walze 3 zwei feststehende Distanzmesssensoren 6a, 6b mit einem Abstand zur Oberseite 17 der Schwinge 14 angeordnet, mit denen entlang einer Geraden G durch die Rotationsachsen der Walzen 3, 4 der Abstand zwischen dem jeweiligen Sensor 6a, 6b und der Oberseite 17 der Schwinge 14 gemessen werden kann, zwecks Bestimmung der Relativposition der Walzen 3, 4 zueinander.

Bis auf die im Folgenden erläuterten Abweichungen erfolgt die Ermittlung der Dicke des Materialbandes 5 bei Verwendung dieser Walzenanordnung in analoger Weise wie bei dem anhand von Fig. 3 beschriebenen Verfahren.

Im vorliegenden Fall verfügen beide Walzen 3, 4 über einen Drehwinkelencoder 16a, 16b, weshalb hier die Durchmesserabweichung der unteren Walze 4 analog wie bei der oberen Walze 3 durchgeführt wird, d.h. es werden für beide Walzen 3, 4 separate Referenz-Rotationswinkel erfasst und anschliessend für jedes Vorschubintervall separate aktuelle Rotationswinkel erfasst, mit denen dann separat die Durchmesserabweichungen der Walzen 3, 4 berechnet werden.

Da für die Erfassung der Relativpositionen der Walzen zueinander mit den Distanzmesssensoren 6a, 6 nicht, wie in Fig. 3, die Position der dem Bandmaterial 5 abgewandten Aussenfläche 11a der oberen Walze 3 ermittelt wird, sondern die Position der Oberseite der Schwinge 14, also die Position einer mit der Lagerung der oberen Walze 3 verbundenen Körperlichkeit, wird hier die aus der Differenz zwischen der Referenz-Relativposition der oberen Walze 3 und der aktuell mit den Sensoren 6a, 6b ermittelten Relativposition der Walzen 3, 4 berechnete theoretische Banddicke nur um die Hälfte der ermittelten Durchmesserabweichung der oberen Walze 3 korrigiert. Dies, weil in dieser Situation eine Durchmesserzunahme dieser Walze 3 nur zur Hälfte zu einer Veränderung der Position der Oberseite der Schwinge 14 beiträgt. Die mit den Sensoren 6a, 6b gemessenen Distanzen werden dabei gemittelt.

Die Durchmesserabweichung der feststehenden unteren Walze 4 wird, wie bereits bei Fig. 3 erläutert, ebenfalls nur zur Hälfte für die Korrektur der theoretischen Banddicke verwendet. Diese wird also im vorliegenden Fall um die Hälfte der Durchmesserabweichung der oberen Walze 3 und um die Hälfte der Durchmesserabweichung der unteren Walze 4 korrigiert.

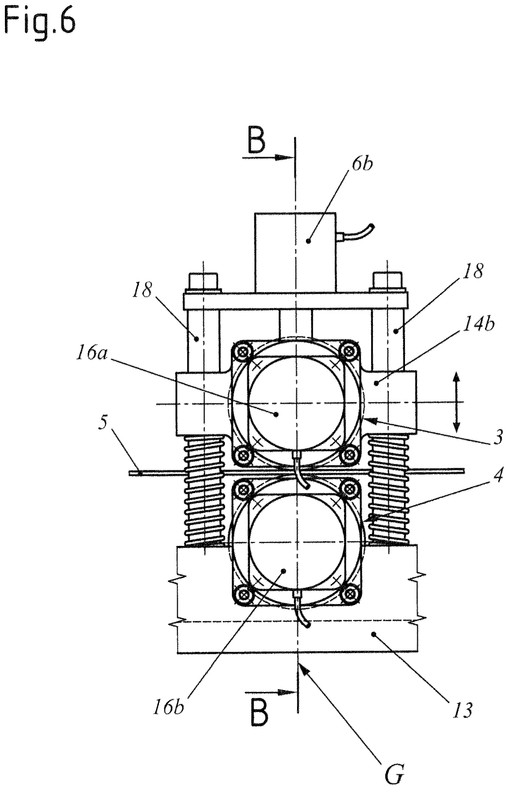

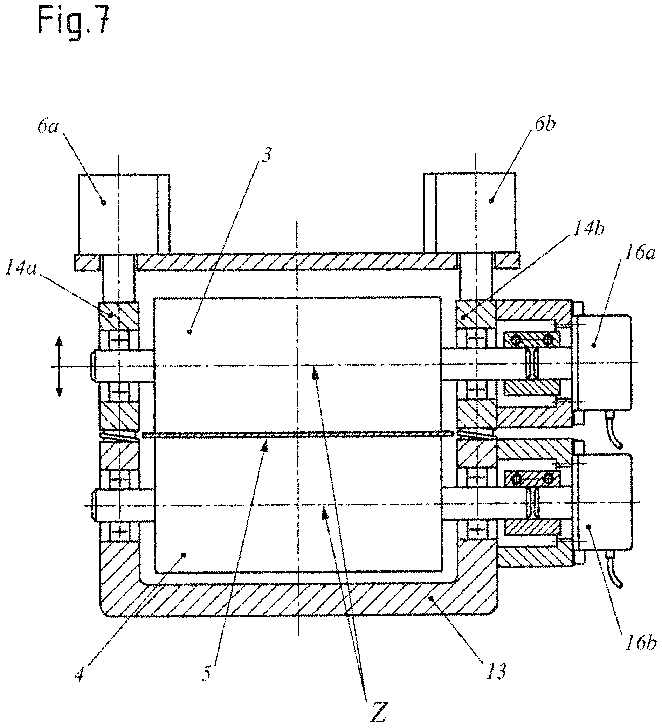

Die Figuren 6 und 7 zeigen eine weitere erfindungsgemässe Walzenanordnung zur Verwendung bei der Durchführung noch einer weiteren bevorzugten Ausführungsform des erfindungsgemässen Verfahrens, und zwar einmal in der Seitenansicht (Fig. 6) und einmal im Vertikalschnitt entlang der Linie B-B in Fig. 6 (Fig. 7).

Diese Walzenanordnung unterscheidet sich von der in den Figuren 4 und 5 dargestellten im Wesentlichen darin, dass die obere Walze 3 nicht schwenkbar in einer Schwinge gelagert ist, sondern entlang von linearen Führungen vertikal verschiebbar ist. Mit den Distanzmesssensoren 6a, 6b, welche hier nicht berührungslos ausgebildet sind, wird direkt auf die Lagergehäuse 14a, 14b der Lagerung der oberen Walze 3 gemessen.

Ansonsten ist das technische Konzept hier mit dem in den Figuren 4 und 5 gezeigten vergleichbar, und Bauteile gleicher Funktion sind hier mit den gleichen Bezugsziffern versehen wie in den Figuren 4 und 5.

Das mit dieser Walzenanordnung durchgeführte erfindungsgemässe Verfahren entspricht von der Vorgehensweise dem anhand der Figuren 4 und 5 beschriebenen.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zum Ermitteln der Dicke eines Materialbandes (5) beim Zuführen des Materialbandes (5) zur Bearbeitungszone einer Werkzeugmaschine (1), insbesondere eines Stanzautomaten (1), umfassend die Schritte:
a) Bereitstellen einer Walzenanordnung mit zwei rotierbaren Walzen (3, 4), nämlich einer ersten Walze (3) und einer zweiten Walze (4), wobei die Rotationsachsen (Z) der zwei Walzen (3, 4) parallel sind und die Walzen (3, 4) senkrecht zu ihren Rotationsachsen (Z) relativ zueinander bewegbar sind, insbesondere verschiebbar sind;
b) Positionieren der Walzen (3, 4) derart relativ zueinander, dass sich die beiden Walzen (3, 4) berühren, und Erfassen in diesem Zustand der Relativposition der Walzen (3, 4) zueinander als Referenz-Relativposition;
c) Anordnen eines Materialbandes (5) zwischen den Walzen (3, 4) derart, dass die Bandlängsrichtung des Materialbands (5) senkrecht zu den Rotationsachsen (Z) der Walzen (3, 4) verläuft und das Materialband (5) zwischen den Walzen (3, 4) eingespannt ist;
d) Vorschieben des zwischen den Walzen (3, 4) eingespannten Materialbandes (5) um eine bestimmte Vorschublänge (L) unter einem schlupffreien Abrollen der Walzen (3, 4) auf der Bandoberfläche (12a, 12b), wobei die Walzen (3, 4) eine Rotation um einen zur bestimmten Vorschublänge (L) korrespondierenden bestimmten Rotationswinkel vollführen,
e) Erfassen der bestimmten Vorschublänge (L) als Referenz-Vorschublänge und des bestimmten Rotationswinkels der ersten Walze (3) als ersten Referenz-Rotationswinkel und/oder Erfassen des Verhältnisses von der bestimmten Vorschublänge (L) und dem bestimmten Rotationswinkel der ersten Walze (3) als erstes Referenz-Vorschublängen/Rotationswinkel-Verhältnis;
und anschliessend:
f) sofern nicht bereits unter Punkt c) erfolgt, Anordnen des zum bestimmungsgemässen Zuführen zur Bearbeitungszone der Werkzeugmaschine (1) vorgesehenen Materialbandes (5) zwischen den Walzen (3, 4) derart, dass die Bandlängsrichtung des Materialbands (5) senkrecht zu den Rotationsachsen (Z) der Walzen (3, 4) verläuft und das Materialband (5) zwischen den Walzen (3, 4) eingespannt ist;
g) intervallweises Vorschieben des zwischen den Walzen (3, 4) eingespannten Materialbandes (5) jeweils um eine Vorschublänge (L), wobei die Walzen (3, 4) intervallweise eine Rotation um einen Rotationswinkel (Ro, Ru) vollführen;
h) Erfassen für jedes Vorschubintervall der Relativposition der Walzen (3, 4) zueinander sowie des Rotationswinkels (Ro) der ersten Walze (3)und der Vorschublänge (L) oder Erfassen für jedes Vorschubintervall der Relativposition der Walzen (3, 4) zueinander sowie des Rotationswinkels (Ro) der ersten Walze (3) und des Verhältnisses von der Vorschublänge (L) und dem Rotationswinkel (Ro) der ersten Walze (3);
i) Vergleichen für jedes Vorschubintervall der aktuell erfassten Vorschublänge (L) mit der Referenz-Vorschublänge, des aktuell erfassten Rotationswinkels (Ro) der ersten Walze (3) mit dem ersten Referenz-Rotationswinkel und/oder des aktuell erfassten Verhältnisses von der Vorschublänge (L) und dem Rotationswinkel (Ro) der ersten Walze (3) mit dem ersten Referenz-Vorschublängen/Rotationswinkel-Verhältnis;
j) Berechnen für jedes Vorschubintervall der Dicke des Materialbandes (5) aus der Differenz zwischen der Referenz-Relativposition und der aktuell ermittelten Relativposition der Walzen (3, 4) zueinander,
wobei für den Fall, dass die aktuell erfasste Vorschublänge (L) von der Referenz-Vorschublänge abweicht, der aktuell erfasste Rotationswinkel (Ro) der ersten Walze (3) von dem ersten Referenz-Rotationswinkel abweicht und/oder das aktuell erfasste Verhältnis von der Vorschublänge (L) und dem Rotationswinkel (Ro) der ersten Walze (3) von dem ersten Referenz-Vorschublängen/Rotationswinkel-Verhältnis abweicht, die ermittelte Vorschublängenabweichung, die ermittelte Rotationswinkelabweichung und/oder die ermittelte Vorschublängen/Rotationswinkel-Verhältnis-Abweichung über den Zusammenhang zwischen dem Walzendurchmesser, dem Rotationswinkel und der Vorschublänge in eine Abweichung des Durchmessers der ersten Walze (3) von deren Durchmesser beim Erfassen der Referenz-Relativposition umgerechnet wird und bei der Berechnung der Dicke des Materialbands (5) berücksichtigt wird.

2. Verfahren nach Anspruch 1, wobei in Schritt e) in analoger Weise wie für die erste Walze (3) auch für die zweite Walze (4) ein zweiter Referenz-Rotationswinkel und/oder ein zweites Referenz-Vorschublängen/Rotationswinkel-Verhältnis erfasst wird,
für jedes Vorschubintervall zusätzlich der Rotationswinkels (Ru) der zweiten Walze (4) mit dem zweiten Referenz-Rotationswinkel und/oder das Verhältnis von der Vorschublänge (L) und dem Rotationswinkel (Ru) der zweiten Walze (4) mit dem zweiten Referenz-Vorschublängen/Rotationswinkel-Verhältnis verglichen wird und für den Fall, dass der aktuell erfasste Rotationswinkel (Ru) der zweiten Walze (4) von dem zweiten Referenz-Rotationswinkel abweicht und/oder das aktuell erfasste Verhältnis von der Vorschublänge (L) und dem Rotationswinkel (Ru) der zweiten Walze (4) von dem zweiten Referenz-Vorschublängen/Rotationswinkel-Verhältnis abweicht, die ermittelte Rotationswinkelabweichung der zweiten Walze (4) und/- oder die ermittelte Vorschublängen/Rotationswinkel-Verhältnis-Abweichung über den Zusammenhang zwischen dem Walzendurchmesser, dem Rotationswinkel und der Vorschublänge in eine Abweichung des Durchmessers der zweiten Walze (4) von deren Durchmesser beim Erfassen der Referenz-Relativposition umgerechnet wird und bei der Berechnung der Dicke des Materialbands (5) berücksichtigt wird.

3. Verfahren nach Anspruch 1, wobei für den Fall,
dass die aktuell erfasste Vorschublänge (L) von der Referenz-Vorschublänge abweicht, der aktuell erfasste Rotationswinkel (Ro) der ersten Walze (3) von dem ersten Referenz-Rotationswinkel abweicht und/oder das aktuell erfasste Verhältnis von der Vorschublänge (L) und dem Rotationswinkel (Ro) der ersten Walze (3) von dem ersten Referenz-Vorschublängen/Rotationswinkel-Verhältnis abweicht
und die ermittelte Vorschublängenabweichung, die ermittelte Rotationswinkelabweichung und/oder die ermittelte Vorschublängen/Rotationswinkel-Verhältnis-Abweichung über den Zusammenhang zwischen dem Walzendurchmesser, dem Rotationswinkel und der Vorschublänge in eine Abweichung des Durchmessers der ersten Walze (3) von deren Durchmesser beim Erfassen der Referenz-Relativposition umgerechnet wird,
davon ausgegangen wird, dass der Walzendurchmesser der zweiten Walze (4) eine identische Abweichung von deren Durchmesser beim Erfassen der Referenz-Relativposition aufweist und diese angenommene Abweichung bei der Berechnung der Dicke des Materialbands (5) berücksichtigt wird.

4. Verfahren nach einem der vorangehenden Ansprüche, wobei die Rotationsachse (Z) einer der Walzen (3, 4), insbesondere der zweiten Walze (4), ortsfest ist und die Rotationsachse (Z) der anderen Walze (3) senkrecht zur Rotationsachse (Z) und senkrecht zur Durchlaufrichtung des Materialbandes (5) verschiebbar ist.

5. Verfahren nach einem der vorangehenden Ansprüche, wobei mindestens eine der Walzen (3, 4) angetrieben ist und die beiden Walzen (3, 4) den Vorschub des Materialbandes (5) bewirken.

6. Verfahren nach einem der vorangehenden Ansprüche, wobei für die Erfassung der Relativpositionen der Walzen (3, 4) zueinander die Position der dem Materialband (5) abgewandten Aussenfläche (11a) mindestens einer der Walzen (3, 4) ermittelt wird, insbesondere der ersten Walze (3).

7. Verfahren nach einem der vorangehenden Ansprüche, wobei für die Erfassung der Relativpositionen der Walzen (3, 4) zueinander die Position einer mit der Lagerung zumindest einer der Walzen (3, 4) verbundenen Körperlichkeit (14; 14a, 14b) ermittelt wird, insbesondere einer mit der Lagerung der ersten Walze (3) verbundenen Körperlichkeit (14; 14a, 14b).

8. Verfahren nach einem der Ansprüche 6 bis 7, wobei für die Ermittlung der Position der dem Materialband (5) abgewandten Aussenfläche (11a) der jeweiligen Walze (3) und/oder der mit der Lagerung der jeweiligen Walze (3) verbundenen Körperlichkeit (14; 14a, 14b) ein oder mehrere berührungslose Distanzmesssensoren (6; 6a, 6b) verwendet werden, insbesondere Wirbelstromsensoren, kapazitive Sensoren oder Lasermesseinrichtungen, insbesondere konfokale Lasermesssysteme.

9. Verfahren nach einem der Ansprüche 6 bis 8, wobei die Ermittlung der Position der dem Materialband (5) abgewandten Aussenfläche (11a) der jeweiligen Walze (3) und/oder der mit der Lagerung der jeweiligen Walze (39 verbundenen Körperlichkeit (14; 14a, 14b) an mehreren Stellen erfolgt, insbesondere im Bereich der beiden Enden der jeweiligen Walze (3).

10. Verfahren nach einem der vorangehenden Ansprüche, wobei das Materialband (5) mit Pilotieröffnungen (9) versehen wird und zur Erfassung der Vorschublänge (L) des Materialbands (5) jeweils die Position einer Pilotieröffnung (9) ermittelt wird, insbesondere über einen Zeilensensor (10).

11. Verfahren nach einem der vorangehenden Ansprüche, wobei das Materialband (5), dessen Dicke ermittelt wird, einer Stanzpresse (1) mit einem Werkzeug zur Herstellung von Blechstapeln zugeführt wird und wobei die ermittelten Blechdicken zur Bestimmung der Stapelhöhe verwendet werden.

12. Walzenanordnung eingerichtet zur Durchführung des Verfahrens nach einem der vorangehenden Ansprüche, umfassend mindestens ein Paar von Walzen (3, 4), zwischen denen das Materialband (5) eingespannt werden kann und mit denen es durch intervallweises Rotieren der Walzen (3, 4) intervallweise vorgeschoben werden kann,
und umfassend Einrichtungen (6; 6a, 6b) zur Erfassung für jedes Vorschubintervall der Relativposition der Walzen (3, 4) zueinander und des Rotationswinkels (Ro, Ru) zumindest einer der Walzen (3, 4).

13. Walzenanordnung nach Anspruch 12, wobei die Einrichtungen (6; 6a, 6b) zur Erfassung der Relativposition der Walzen (3, 4) zueinander ausgebildet sind zur Ermittlung der Position der dem Materialband (5) abgewandten Aussenfläche (11a) mindestens einer der Vorschubwalzen (3, 4).

14. Walzenanordnung nach einem der Ansprüche 12 bis 13, wobei die Einrichtungen (6; 6a, 6b) zur Erfassung der Relativposition der Walzen (3, 4) zueinander ausgebildet sind zur Ermittlung der Position einer mit der Lagerung zumindest einer der Walzen (3) verbundenen Körperlichkeit (14; 14a, 14b).

15. Walzenanordnung nach einem der Ansprüche 12 bis 14, wobei die Einrichtungen (6; 6a, 6b) zur Erfassung der Relativposition der Walzen (3, 4) zueinander für die Ermittlung der Position der dem Materialband (5) abgewandten Aussenfläche (11a) der jeweiligen Walze (3) und/oder der mit der Lagerung der jeweiligen Walze (3) verbundenen Körperlichkeit (14; 14a, 14b) ein oder mehrere berührungslose Distanzmesssensoren (6; 6a, 6b) aufweisen, insbesondere Wirbelstromsensoren, kapazitive Sensoren oder Lasermesseinrichtungen, insbesondere konfokale Lasermesssysteme.

16. Walzenanordnung nach einem der Ansprüche 12 bis 15, wobei die Einrichtungen (6; 6a, 6b) zur Erfassung der Relativposition der Walzen (3, 4) zueinander derartig ausgebildet sind, dass die Ermittlung der Position der dem Materialband (5) abgewandten Aussenfläche (11a) der jeweiligen Vorschubwalze (3) und/oder der mit der Lagerung der jeweiligen Walze (3) verbundenen Körperlichkeit (14; 14a, 14b) an mehreren Stellen erfolgen kann, insbesondere im Bereich der beiden Enden der jeweiligen Walze (3).

17. Vorschubapparat mit einer Walzenanordnung nach einem der Ansprüche 12 bis 16.

18. Werkzeugmaschine zur Durchführung des Verfahrens nach einem der Ansprüche 1 bis 11, mit einer Walzenanordnung nach einem der Ansprüche 12 bis 16 oder einem Vorschubapparat nach Anspruch 17.

19. Werkzeugmaschine nach Anspruch 18, wobei die Werkzeugmaschine eine Stanzpresse (1) mit einem Werkzeug zur Herstellung von Blechstapeln ist.

## Claims

1. Method for determining the thickness of a material strip (5) when feeding the material strip (5) to the processing zone of a machine tool (1), in particular an automatic punching machine (1), comprising the steps of:
a) providing a roller arrangement with two rotatable rollers (3, 4), namely a first roller (3) and a second roller (4), wherein the axes of rotation (Z) of the two rollers (3, 4) are parallel and the rollers (3, 4) can be moved perpendicularly to their axes of rotation (Z) relative to one another, in particular can be shifted;
b) positioning the rollers (3, 4) relative to each other in such a way that the two rollers (3, 4) touch each other, and detecting the relative position of the rollers (3, 4) relative to each other in this state as a reference relative position;
c) arranging a material strip (5) between the rollers (3, 4) in such a way that the longitudinal direction of the material strip (5) runs perpendicular to the axes of rotation (Z) of the rollers (3, 4) and the material strip (5) is clamped between the rollers (3, 4);
d) advancing the material strip (5) clamped between the rollers (3, 4) by a specific advance length (L) while rolling the rollers (3, 4) on the strip surface (12a, 12b) without slippage, wherein the rollers (3, 4) perform a rotation by a specific rotation angle corresponding to the specific advance length (L),
e) detecting the determined advance length (L) as the reference advance length and the determined rotation angle of the first roller (3) as the first reference rotation angle and/or detecting the ratio of the determined advance length (L) and the determined rotation angle of the first roller (3) as the first reference advance length/rotation angle ratio;
and afterwards:
f) if not already happened at step c), arranging the material strip (5) provided for the intended feeding to the machining zone of the machine tool (1) between the rollers (3, 4) in such a way that the longitudinal direction of the material strip (5) runs perpendicular to the axes of rotation (Z) of the rollers (3, 4) and the material strip (5) is clamped between the rollers (3, 4);
g) intermittently advancing the material strip (5) clamped between the rollers (3, 4) by an advance length (L) in each case, wherein the rollers (3, 4) rotate intermittently about an angle of rotation (Ro, Ru) ;
h) detecting for each feed interval the relative position of the rollers (3, 4) to each other as well as the angle of rotation (Ro) of the first roller (3) and the advance length (L) or detecting for each feed interval the relative position of the rollers (3, 4) to each other as well as the rotation angle (Ro) of the first roller (3) and the ratio of the advance length (L) and the rotation angle (Ro) of the first roller (3) to each other;
i) comparing for each feed interval the currently detected advance length (L) with the reference advance length, the currently detected rotation angle (Ro) of the first roller (3) with the first reference rotation angle and/or the currently detected ratio of the advance length (L) and the rotation angle (Ro) of the first roller (3) with the first reference advance length/rotation angle ratio;
j) calculating the thickness of the material strip (5) for each feed interval from the difference between the reference relative position and the currently determined relative position of the rollers (3, 4) to each other,
wherein, in case the currently detected advance length (L) deviates from the reference advance length, the currently detected rotation angle (Ro) of the first roller (3) deviates from the first reference rotation angle and/or the currently detected ratio of the advance length (L) and the rotation angle (Ro) of the first roller (3) deviates from the first reference advance length/rotation angle ratio, the determined advance length deviation, the determined rotation angle deviation and/or the determined advance length/rotation angle ratio deviation is converted via the relationship between the roller diameter, the rotation angle and the advance length into a deviation of the diameter of the first roller (3) from its diameter when the reference relative position is detected and is taken into account in the calculation of the thickness of the material strip (5) .

2. Method according to claim 1, wherein in step e) a second reference rotation angle and/or a second reference advance length/rotation angle ratio is detected for the second roller (4) in the same way as for the first roller (3),
for each feed interval, the rotation angle (Ru) of the second roller (4) is additionally compared with the second reference rotation angle and/or the ratio of the advance length (L) and the rotation angle (Ru) of the second roller (4) is compared with the second reference advance length/rotation angle ratio, and in the event that the currently detected rotation angle (Ru) of the second roller (4) deviates from the second reference rotation angle and/or the currently detected ratio of the advance length (L) and the rotation angle (Ru) of the second roller (4) deviates from the second reference advance length/rotation angle ratio, the determined rotation angle deviation of the second roller (4) and/or the determined advance length/rotation angle ratio deviation is converted via the relationship between the roller diameter, the rotation angle and the advance length into a deviation of the diameter of the second roller (4) from its diameter when the reference relative position is detected and is taken into account when calculating the thickness of the material strip (5).

3. Method according to claim 1, wherein in the case,
that the currently detected advance length (L) deviates from the reference advance length, the currently detected rotation angle (Ro) of the first roller (3) deviates from the first reference rotation angle and/or the currently detected ratio of the advance length (L) and the rotation angle (Ro) of the first roller (3) deviates from the first reference advance length/rotation angle ratio
and the determined advance length deviation, the determined rotation angle deviation and/or the determined advance length/rotation angle ratio deviation is converted via the relationship between the roller diameter, the rotation angle and the advance length into a deviation of the diameter of the first roller (3) from its diameter when the reference relative position is detected,
it is assumed that the roller diameter of the second roller (4) has an identical deviation from its diameter when the reference relative position is detected and this assumed deviation is taken into account when calculating the thickness of the material strip (5).

4. Method according to one of the preceding claims, wherein the axis of rotation (Z) of one of the rollers (3, 4), in particular of the second roller (4), is stationary and the axis of rotation (Z) of the other roller (3) is shiftable perpendicularly to the axis of rotation (Z) and perpendicularly to the direction of passage of the material strip (5).

5. Method according to one of the preceding claims, wherein at least one of the rollers (3, 4) is driven and the two rollers (3, 4) effect the feed of the material strip (5).

6. Method according to one of the preceding claims, wherein the position of the outer surface (11a) of at least one of the rollers (3, 4) facing away from the material strip (5), in particular of the first roller (3), is determined for detecting the relative positions of the rollers (3, 4) with respect to one another.

7. Method according to one of the preceding claims , wherein the position of a physical entity (14; 14a, 14b) connected to the bearing of at least one of the rollers (3, 4), in particular of a physical entity (14; 14a, 14b) connected to the bearing of the first roller (3), is determined for detecting the relative positions of the rollers (3, 4) with respect to one another.

8. Method according to one of claims 6 to 7, wherein one or more non-contact distance measuring sensors (6; 6a, 6b), in particular eddy current sensors, capacitive sensors or laser measuring devices, in particular confocal laser measuring systems, are used to determine the position of the outer surface (11a) of the respective roller (3) facing away from the material strip (5) and/or the physical entity (14; 14a, 14b) connected to the bearing of the respective roller (3).

9. Method according to one of claims 6 to 8, wherein the position of the outer surface (11a) of the respective roller (3) facing away from the material strip (5) and/or the physical entity (14; 14a, 14b) connected to the bearing of the respective roller (3) is determined at several points, in particular in the region of the two ends of the respective roller (3).

10. Method according to one of the preceding claims, wherein the material strip (5) is provided with piloting openings (9) and the position of a piloting opening (9) is determined in each case for detecting the advance length (L) of the material strip (5), in particular via a line sensor (10).

11. Method according to one of the preceding claims, wherein the material strip (5), the thickness of which is determined, is fed to a punching press (1) with a tool for producing metal sheet stacks and wherein the determined metal sheet thicknesses are used to determine the stack height.

12. Roller arrangement set up for carrying out the method according to one of the preceding claims, comprising at least one pair of rollers (3, 4), between which the material strip (5) can be clamped and with which it can be advanced intermittently by rotating the rollers (3, 4) in intervals,
and comprising devices (6; 6a, 6b) for detecting the relative position of the rollers (3, 4) to one another and the angle of rotation (Ro, Ru) of at least one of the rollers (3, 4) for each feed interval.

13. Roller arrangement according to claim 12, wherein the devices (6; 6a, 6b) for detecting the relative position of the rollers (3, 4) to one another are designed to determine the position of the outer surface (11a) of at least one of the feed rollers (3, 4) facing away from the material strip (5).

14. Roller arrangement according to one of claims 12 to 13, wherein the devices (6; 6a, 6b) for detecting the relative position of the rollers (3, 4) with respect to one another are designed to determine the position of a physical entity (14; 14a, 14b) connected to the bearing of at least one of the rollers (3).

15. Roller arrangement according to one of claims 12 to 14, wherein the devices (6; 6a, 6b) for detecting the relative position of the rollers (3, 4) to one another for determining the position of the outer surface (11a) of the respective roller (3) facing away from the material strip (5) and/or the physical entity (14; 14a, 14b) have one or more non-contact distance measuring sensors (6; 6a, 6b), in particular eddy current sensors, capacitive sensors or laser measuring devices, in particular confocal laser measuring systems.

16. Roller arrangement according to one of claims 12 to 15, wherein the devices (6; 6a, 6b) for detecting the relative position of the rollers (3, 4) with respect to one another are designed in such a way that the determination of the position of the outer surface (11a) of the respective feed roller (3) facing away from the material strip (5) and/or the physical entity (14; 14a, 14b) connected to the bearing of the respective roller (3) can take place at several points, in particular in the area of the two ends of the respective roller (3).

17. Feed apparatus with a roller arrangement according to one of claims 12 to 16.

18. Machine tool for carrying out the method according to one of the claims 1 to 11, with a roller arrangement according to one of the claims 12 to 16 or a feed apparatus according to claim 17.

19. Machine tool according to claim 18,
wherein the machine tool is a punching press (1) with a tool for producing stacks of metal sheets.

## Revendications

1. Procédé pour déterminer l'épaisseur d'une bande de matériau (5) lors de l'introduction de la bande de matériau (5) dans la zone de traitement d'une machine-outil (1), en particulier une poinçonneuse automatique (1), comprenant les étapes suivantes :
a) fournir un agencement de rouleaux avec deux rouleaux rotatifs (3, 4), à savoir un premier rouleau (3) et un deuxième rouleau (4), dans lequel les axes de rotation (Z) des deux rouleaux (3, 4) sont parallèles et les rouleaux (3, 4) peuvent être déplacés perpendiculairement à leurs axes de rotation (Z) l'un par rapport à l'autre, en particulier ils peuvent être déplacés ;
b) positionner les rouleaux (3, 4) l'un par rapport à l'autre de manière à ce que les deux rouleaux (3, 4) se touchent, et détecter la position relative des rouleaux (3, 4) l'un par rapport à l'autre dans cet état en tant que position relative de référence ;
c) disposer une bande de matériau (5) entre les rouleaux (3, 4) de manière à ce que la direction longitudinale de la bande de matériau (5) soit perpendiculaire aux axes de rotation (Z) des rouleaux (3, 4) et que la bande de matériau (5) soit serrée entre les rouleaux (3, 4) ;
d) faire avancer la bande de matériau (5) coincée entre les rouleaux (3, 4) d'une longueur d'avance spécifique (L) tout en faisant rouler les rouleaux (3, 4) sur la surface de la bande (12a, 12b) sans glissement, les rouleaux (3, 4) effectuant une rotation d'un angle de rotation spécifique correspondant à la longueur d'avance spécifique (L),
e) détecter la longueur d'avance déterminée (L) en tant que longueur d'avance de référence et l'angle de rotation déterminé du premier rouleau (3) en tant que premier angle de rotation de référence et/ou détecter le rapport entre la longueur d'avance déterminée (L) et l'angle de rotation déterminé du premier rouleau (3) en tant que premier rapport longueur d'avance/angle de rotation de référence ;
et ensuite :
f) si cela n'a pas déjà été fait à l'étape c), disposer la bande de matériau (5) destinée à l'alimentation de la zone d'usinage de la machine-outil (1) entre les rouleaux (3, 4) de manière à ce que la direction longitudinale de la bande de matériau (5) soit perpendiculaire aux axes de rotation (Z) des rouleaux (3, 4) et que la bande de matériau (5) soit serrée entre les rouleaux (3, 4) ;
g) faire avancer par intermittence la bande de matériau (5) coincée entre les rouleaux (3, 4) d'une longueur d'avance (L) dans chaque cas, les rouleaux (3, 4) tournant par intermittence autour d'un angle de rotation (Ro, Ru) ;
h) détecter pour chaque intervalle d'alimentation la position relative des rouleaux (3, 4) l'un par rapport à l'autre ainsi que l'angle de rotation (Ro) du premier rouleau (3) et la longueur d'avance (L) ou détecter pour chaque intervalle d'alimentation la position relative des rouleaux (3, 4) l'un par rapport à l'autre ainsi que l'angle de rotation (Ro) du premier rouleau (3) et le rapport entre la longueur d'avance (L) et l'angle de rotation (Ro) du premier rouleau (3) l'un par rapport à l'autre ;
i) comparer, pour chaque intervalle d'alimentation, la longueur d'avance (L) actuellement détectée avec la longueur d'avance de référence, l'angle de rotation (Ro) actuellement détecté du premier rouleau (3) avec le premier angle de rotation de référence et/ou le rapport actuellement détecté entre la longueur d'avance (L) et l'angle de rotation (Ro) du premier rouleau (3) avec le premier rapport longueur d'avance/angle de rotation de référence ;
j) calculer l'épaisseur de la bande de matériau (5) pour chaque intervalle d'alimentation à partir de la différence entre la position relative de référence et la position relative actuellement déterminée des rouleaux (3, 4) l'un par rapport à l'autre,
dans lequel, si la longueur d'avance (L) actuellement détectée s'écarte de la longueur d'avance de référence, l'angle de rotation (Ro) actuellement détecté du premier rouleau (3) s'écarte du premier angle de rotation de référence et/ou le rapport actuellement détecté entre la longueur d'avance (L) et l'angle de rotation (Ro) du premier rouleau (3) s'écarte du premier rapport de référence entre la longueur d'avance et l'angle de rotation, l'écart de longueur d'avance déterminé, l'écart déterminé de l'angle de rotation et/ou l'écart déterminé du rapport longueur d'avance/angle de rotation est converti, via la relation entre le diamètre du rouleau, l'angle de rotation et la longueur d'avance, en un écart du diamètre du premier rouleau (3) par rapport à son diamètre lorsque la position relative de référence est détectée, et est pris en compte dans le calcul de l'épaisseur de la bande de matériau (5).

2. Procédé selon la revendication 1, dans lequel, à l'étape e), un deuxième angle de rotation de référence et/ou un deuxième rapport longueur d'avance/angle de rotation de référence est détecté pour le deuxième rouleau (4) de la même manière que pour le premier rouleau (3),
pour chaque intervalle d'alimentation, l'angle de rotation (Ru) du deuxième rouleau (4) est en outre comparé au deuxième angle de rotation de référence et/ou le rapport entre la longueur d'avance (L) et l'angle de rotation (Ru) du deuxième rouleau (4) est comparé au rapport entre la longueur d'avance et le deuxième angle de rotation de référence, et dans le cas où l'angle de rotation (Ru) actuellement détecté du deuxième rouleau (4) s'écarte du deuxième angle de rotation de référence et/ou le rapport actuellement détecté de la longueur d'avance (L) et de l'angle de rotation (Ru) du deuxième rouleau (4) s'écarte du deuxième rapport longueur d'avance/angle de rotation de référence, l'écart déterminé de l'angle de rotation du deuxième rouleau (4) et/ou l'écart déterminé du rapport longueur d'avance/angle de rotation est converti, via la relation entre le diamètre du rouleau, l'angle de rotation et la longueur d'avance, en un écart du diamètre du deuxième rouleau (4) par rapport à son diamètre lorsque la position relative de référence est détectée, et est prise en compte lors du calcul de l'épaisseur de la bande de matériau (5).

3. Procédé selon la revendication 1, dans lequel dans le cas où,
la longueur d'avance (L) actuellement détectée s'écarte de la longueur d'avance de référence, l'angle de rotation (Ro) actuellement détecté du premier rouleau (3) s'écarte du premier angle de rotation de référence et/ou le rapport actuellement détecté entre la longueur d'avance (L) et l'angle de rotation (Ro) du premier rouleau (3) s'écarte du premier rapport de référence entre la longueur d'avance et l'angle de rotation
et l'écart de longueur d'avance déterminé, l'écart d'angle de rotation déterminé et/ou l'écart de rapport longueur d'avance/angle de rotation déterminé est converti, via la relation entre le diamètre du rouleau, l'angle de rotation et la longueur d'avance, en un écart du diamètre du premier rouleau (3) par rapport à son diamètre lorsque la position relative de référence est détectée,
on suppose que le diamètre du deuxième rouleau (4) présente un écart identique par rapport à son diamètre lorsque la position relative de référence est détectée, et cet écart supposé est pris en compte dans le calcul de l'épaisseur de la bande de matériau (5).

4. Procédé selon l'une des revendications précédentes, dans lequel l'axe de rotation (Z) de l'un des rouleaux (3, 4), en particulier du deuxième rouleau (4), est fixe et l'axe de rotation (Z) de l'autre rouleau (3) peut être déplacé perpendiculairement à l'axe de rotation (Z) et perpendiculairement à la direction de passage de la bande de matériau (5).

5. Procédé selon l'une des revendications précédentes, dans lequel au moins un des rouleaux (3, 4) est entraîné et les deux rouleaux (3, 4) assurent l'alimentation de la bande de matériau (5).

6. Procédé selon l'une des revendications précédentes, dans lequel la position de la surface extérieure (11a) d'au moins un des rouleaux (3, 4) tournée vers l'extérieur de la bande de matériau (5), en particulier du premier rouleau (3), est déterminée pour détecter les positions relatives des rouleaux (3, 4) l'un par rapport à l'autre.

7. Procédé selon l'une des revendications précédentes, dans lequel la position d'une entité physique (14; 14a, 14b) reliée au palier d'au moins un des rouleaux (3, 4), en particulier d'une entité physique (14; 14a, 14b) reliée au palier du premier rouleau (3), est déterminée pour détecter les positions relatives des rouleaux (3, 4) l'un par rapport à l'autre.

8. Procédé selon l'une des revendications 6 à 7, dans lequel un ou plusieurs capteurs de mesure de distance sans contact (6; 6a, 6b), en particulier des capteurs à courant de Foucault, des capteurs capacitifs ou des dispositifs de mesure laser, en particulier des systèmes de mesure laser confocaux, sont utilisés pour déterminer la position de la surface extérieure (11a) du rouleau respectif (3) orientée à l'opposé de la bande de matériau (5) et/ou de l'entité physique (14; 14a, 14b) reliée au roulement du rouleau respectif (3).

9. Procédé selon l'une des revendications 6 à 8, dans lequel la position de la surface extérieure (11a) du rouleau respectif (3) opposée à la bande de matériau (5) et/ou à l'entité physique (14; 14a, 14b) reliée au roulement du rouleau respectif (3) est déterminée en plusieurs points, en particulier dans la région des deux extrémités du rouleau respectif (3).

10. Procédé selon l'une des revendications précédentes, dans lequel la bande de matériau (5) est pourvue d'ouvertures de pilotage (9) et la position d'une ouverture de pilotage (9) est déterminée dans chaque cas pour détecter la longueur d'avance (L) de la bande de matériau (5), en particulier par l'intermédiaire d'un capteur de ligne (10).

11. Procédé selon l'une des revendications précédentes, dans lequel la bande de matériau (5), dont l'épaisseur est déterminée, est acheminée vers une presse de poinçonnage (1) avec un outil pour produire des piles de tôles et dans lequel les épaisseurs de tôles déterminées sont utilisées pour déterminer la hauteur de la pile.

12. Agencement de rouleaux mis en place pour l'exécution du procédé selon l'une des revendications précédentes, comprenant au moins une paire de rouleaux (3, 4), entre lesquels la bande de matériau (5) peut être serrée et avec lesquels elle peut être avancée par intermittence en faisant tourner les rouleaux (3, 4) à intervalles réguliers,
et comprenant des dispositifs (6; 6a, 6b) pour détecter la position relative des rouleaux (3, 4) l'un par rapport à l'autre et l'angle de rotation (Ro, Ru) d'au moins un des rouleaux (3, 4) pour chaque intervalle d'alimentation.

13. Agencement de rouleaux selon la revendication 12, dans lequel les dispositifs (6; 6a, 6b) de détection de la position relative des rouleaux (3, 4) l'un par rapport à l'autre sont conçus pour déterminer la position de la surface extérieure (11a) d'au moins un des rouleaux d'alimentation (3, 4) orientée à l'opposé de la bande de matériau (5).

14. Agencement de rouleaux selon l'une des revendications 12 à 13, dans lequel les dispositifs (6; 6a, 6b) de détection de la position relative des rouleaux (3, 4) l'un par rapport à l'autre sont conçus pour déterminer la position d'une entité physique (14 ; 14a, 14b) reliée au palier d'au moins un des rouleaux (3).

15. Agencement de rouleaux selon l'une des revendications 12 à 14, dans lequel les dispositifs (6; 6a, 6b) de détection de la position relative des rouleaux (3, 4) l'un par rapport à l'autre pour déterminer la position de la surface extérieure (11a) du rouleau respectif (3) orientée à l'opposé de la bande de matériau (5) et/ou de l'entité physique (14; 14a, 14b) comportent un ou plusieurs capteurs de mesure de distance sans contact (6; 6a, 6b), en particulier des capteurs à courants de Foucault, des capteurs capacitifs ou des dispositifs de mesure à laser, en particulier des systèmes de mesure à laser confocaux.

16. Agencement de rouleaux selon l'une des revendications 12 à 15, dans lequel les dispositifs (6; 6a, 6b) de détection de la position relative des rouleaux (3, 4) l'un par rapport à l'autre sont conçus de telle sorte que la détermination de la position de la surface extérieure (11a) du rouleau d'alimentation respectif (3) orientée à l'opposé de la bande de matériau (5) et/ou de l'entité physique (14; 14a, 14b) reliée au palier du rouleau respectif (3) peut avoir lieu en plusieurs points, en particulier dans la zone des deux extrémités du rouleau respectif (3).

17. Appareil d'alimentation avec un agencement de rouleaux selon l'une des revendications 12 à 16.

18. Machine-outil pour la mise en œuvre du procédé selon l'une des revendications 1 à 11, avec un agencement de rouleaux selon l'une des revendications 12 à 16 ou un appareil d'alimentation selon la revendication 17.

19. Machine-outil selon la revendication 18, dans laquelle la machine-outil est une presse de poinçonnage (1) avec un outil pour produire des piles de tôles.
